# EUROPÄISCHE PATENTSCHRIFT

(11) **EP 3 818 550 B1**
(45) Veröffentlichungstag und Bekanntmachung des Hinweises auf die Patenterteilung: **07.12.2022**
(21) Anmeldenummer: 18759859.4
(22) Anmeldetag: 08.08.2018
(51) Int. Cl.: H01H 39/00, H01H 79/00, H01H 9/54, H02M 1/32, H02H 7/122

(54) **ANORDNUNG MIT EINEM ÜBERBRÜCKUNGSSCHALTER**
ARRANGEMENT HAVING A BYPASS SWITCH
SYSTÈME POURVU D'UN COMMUTATEUR DE PONTAGE

(43) Veröffentlichungstag der Anmeldung: 12.05.2021
(73) Patentinhaber: Siemens Energy Global GmbH & Co. KG, 81739 München (DE)
(72) Erfinder: SCHREMMER, Frank, 90768 Fürth (DE); VIETH, Michael, 90482 Nürnberg (DE)
(86) Internationale Anmeldenummer: PCT/EP2018/071519
(87) Internationale Veröffentlichungsnummer: WO 2020/030262

(56) Entgegenhaltungen:
- WO-A1-2007/095873
- WO-A1-2016/177433
- CA-A- 850 910
- DE-A1- 10 323 220
- DE-B3- 10 254 497
- DE-U1- 9 419 141

## Beschreibung

Die Erfindung betrifft eine Anordnung mit einem Überbrückungsschalter für ein Modul eines modularen Multilevelstromrichters, wobei der Überbrückungsschalter durch eine pyrotechnische Treibladung antreibbar ist. Ein derartiger Überbrückungsschalter ist beispielsweise aus der internationalen Patentanmeldung WO 2011/107363 A1 bekannt.

Modulare Multilevelstromrichter weisen eine Vielzahl von Modulen auf, welche elektrisch in Reihe geschaltet sind. Wenn eines der Module der Reihenschaltung während des Betriebs des Multilevelstromrichters ausfällt, dann wird dieses ausgefallene Modul mittels des Überbrückungsschalters elektrisch überbrückt. Dadurch wird sichergestellt, dass der Multilevelstromrichter auch bei Ausfall von einem oder von mehreren Modulen weiterarbeiten kann.

Zum Auslösen eines derartigen Überbrückungsschalters ist es denkbar, unmittelbar an der pyrotechnischen Treibladung einen elektrischen Anzünder anzuordnen, welcher im Bedarfsfall auf ein elektrisches Auslösesignal hin die Treibladung anzündet. Der elektrische Anzünder kann dabei mit einer elektrischen Leitung versehen sein, mittels der der elektrische Anzünder mit dem elektrischen Auslösesignal beaufschlagt wird. Auf dieses elektrische Auslösesignal hin zündet der elektrische Anzünder die Treibladung an.

Bei einer derartigen Ausgestaltung würden jedoch bei dem Überbrückungsschalter mehrere verschiedene elektrische Potentiale auftreten: Das elektrische Potential der das elektrische Auslösesignal führenden Leitung sowie das elektrische Potential des Moduls des modularen Multilevelstromrichters, dem der Überbrückungsschalter zugeordnet ist. Daher wäre im Überbrückungsschalter eine aufwendige galvanische Trennung zwischen dem elektrischen Anzünder und den mit dem Modul verbundenen Anschlüssen (Lastanschlüssen) des Überbrückungsschalters notwendig. Bei den in einem modularen Multilevelstromrichter oftmals auftretenden großen Spannungen ist eine derartige galvanische Trennung vergleichsweise aufwendig und teuer.

Die internationale Patentanmeldung WO 2016/177433 A1 offenbart einen modularen Multilevelstromrichter mit Modulen, die mittels eines Überbrückungsschalter elektrisch überbrückt werden können. Die Überbrückungsschalter werden dabei mittels einer Treibladung geschlossen.

Das Gebrauchsmuster DE 94 19 141 U1 offenbart einen Kurzschließer zum Löschen von Störlichtbögen bei Schaltanlagen. Der Kurzschließer weist eine Patrone mit einem integrierten Sprengsatz auf.

Der Erfindung liegt die Aufgabe zugrunde, eine Anordnung und ein Verfahren anzugeben, bei denen auf eine preisgünstige Weise Probleme aufgrund unterschiedlicher elektrischer Potentiale des Anzünders und des Überbrückungsschalters vermieden werden.

Diese Aufgabe wird erfindungsgemäß gelöst durch eine Anordnung und durch ein Verfahren gemäß den unabhängigen Patentansprüchen. Vorteilhafte Ausgestaltungen der Anordnung und des Verfahrens sind in den abhängigen Patentansprüchen angegeben.

Offenbart wird eine Anordnung gemäß Anspruch 1.

Dabei ist insbesondere der elektrische Anzünder mit einem ersten Ende der Anzündleitung verbunden, und ein zweites Ende der Anzündleitung ist mit der Treibladung verbunden. Hierbei ist vorteilhaft, dass der elektrische Anzünder beabstandet von dem Überbrückungsschalter angeordnet ist. Dadurch besteht eine galvanische Trennung zwischen dem Potential des elektrischen Anzünders und dem elektrischen Potential des Überbrückungsschalters. Zwischen dem elektrischen Anzünder und der Treibladung des Überbrückungsschalters ist lediglich die Anzündleitung (Detonationsleitung, Sprengleitung) vorhanden, welche den elektrischen Strom nur schlecht leitet. Daher werden Probleme aufgrund unterschiedlicher elektrischer Potentiale des elektrischen Anzünders und des Überbrückungsschalters vermieden. Eine derartige Anzündleitung weist insbesondere eine vergleichsweise hohe Abbrandgeschwindigkeit auf, beispielsweise eine Abbrandgeschwindigkeit größer als 100 m/s, insbesondere eine Abbrandgeschwindigkeit größer als 1000 m/s. Dadurch unterscheidet sich eine derartige Anzündleitung von einer (beispielsweise von Feuerwerkskörpern bekannten) Zündschnur, welche eine sehr geringe Abbrandgeschwindigkeit aufweist, beispielsweise nur einige mm/s. Eine derartige Anzündleitung brennt also explosionsartig ab und ist daher in der Lage, sehr schnell ein Signal (Detonationssignal, Explosionssignal) von dem elektrischen Anzünder zu der Treibladung zu übertragen. Dadurch kommt es durch die Anzündleitung nur zu sehr geringen zeitlichen Verzögerungen.

Die Anordnung kann auch so ausgestaltet sein, dass der elektrische Anzünder dazu eingerichtet ist, auf ein elektrisches Auslösesignal hin die Anzündleitung anzuzünden. Dies kann beispielsweise dadurch realisiert sein, dass der elektrische Anzünder aufgrund der Energie des elektrischen Auslösesignals eine heiße oder glühende Stelle erzeugt, welche an der Anzündleitung (insbesondere an dem ersten Ende der Anzündleitung) angeordnet ist. Durch diese heiße oder glühende Stelle wird die Anzündleitung angezündet. Insbesondere kann der elektrische Anzünder so ausgestaltet sein, dass er zusätzlich zu der heißen oder glühenden Stelle einen erhöhten Druck aufbaut. Dadurch kann die Anzündleitung durch die Kombination von Hitze und Druck angezündet werden.

Die Anordnung kann so ausgestaltet sein, dass die Treibladung dazu eingerichtet ist, auf ihre Entzündung hin den Überbrückungsschalter zu schließen.

Dabei kann die Anordnung so ausgestaltet sein, dass der Überbrückungsschalter einen Festkontakt und einen Bewegkontakt aufweist, und die pyrotechnische Treibladung dazu eingerichtet ist, auf ihre Entzündung hin den Bewegkontakt in Richtung des Festkontakts zu beschleunigen und dadurch den Überbrückungsschalter zu schließen.

Die Anordnung kann auch so ausgestaltet sein, dass das Modul einen ersten Modulanschluss, einen zweiten Modulanschluss, ein erstes elektronisches Schaltelement, ein zweites elektronisches Schaltelement und einen elektrischen Energiespeicher aufweist.

Die Anordnung kann so ausgestaltet sein, dass das erste elektronische Schaltelement und das zweite elektronische Schaltelement in einer Halbbrückenschaltung angeordnet sind. Ein solches Modul wird auch als Halbbrücken-Modul bezeichnet.

Die Anordnung kann auch so ausgestaltet sein, dass das Modul ein drittes elektronisches Schaltelement und ein viertes elektronisches Schaltelement aufweist, wobei das erste elektronische Schaltelement, das zweite elektronische Schaltelement, das dritte elektronische Schaltelement und das vierte elektronische Schaltelement in einer Vollbrückenschaltung angeordnet sind. Ein derartiges Modul wird auch als Vollbrücken-Modul bezeichnet.

Offenbart wird weiterhin ein modularer Multilevelstromrichter mit einer Mehrzahl von Anordnungen gemäß einer der vorstehend beschriebenen Varianten.

Bei einem solchen modularen Multilevelstromrichter können die Module zweipolige Module sein, welche elektrisch in Reihe geschaltet sind.

Offenbart wird weiterhin ein Verfahren gemäß Anspruch 10.

Bei diesem Verfahren kann das Modul einen ersten Modulanschluss, einen zweiten Modulanschluss, ein erstes elektronisches Schaltelement, ein zweites elektronisches Schaltelement und einen elektrischen Energiespeicher aufweisen.

Bei dem Verfahren können das erste elektronische Schaltelement und das zweite elektronische Schaltelement in einer Halbbrückenschaltung angeordnet sein.

Bei diesem Verfahren kann das Modul ein drittes elektronisches Schaltelement und ein viertes elektronisches Schaltelement aufweisen, wobei das erste elektronische Schaltelement, das zweite elektronische Schaltelement, das dritte elektronische Schaltelement und das vierte elektronische Schaltelement in einer Vollbrückenschaltung angeordnet sind.

Das beschriebene Verfahren und die beschriebenen Anordnungen weisen gleiche bzw. gleichartige Vorteile auf.

Im Folgenden wird die Erfindung anhand von Ausführungsbeispielen näher erläutert. Gleiche Bezugszeichen verweisen dabei auf gleiche oder gleichwirkende Elemente. Dazu ist in
- Figur 1: ein Ausführungsbeispiel eines modularen Multilevelstromrichters mit erfindungsgemäßen Anordnungen, in
- Figur 2: ein beispielhaftes Modul des Multilevelstromrichters mit einer erfindungsgemäßen Anordnung und in
- Figur 3: ein weiteres beispielhaftes Modul des Multilevelstromrichters mit einer erfindungsgemäßen Anordnung dargestellt.

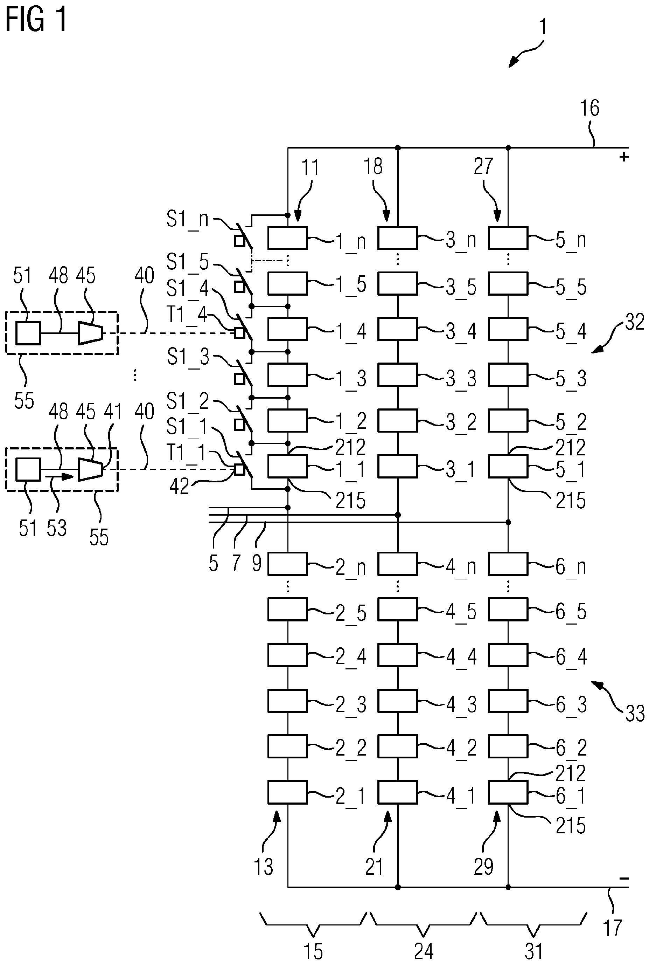

In Figur 1 ist ein Ausführungsbeispiel eines Stromrichters 1 in Form eines modularen Multilevelstromrichters 1 dargestellt. Dieser Multilevelstromrichter 1 weist einen ersten Wechselspannungsanschluss 5, einen zweiten Wechselspannungsanschluss 7 und einen dritten Wechsel-spannungsanschluss 9 auf. Der erste Wechselspannungsanschluss 5 ist elektrisch mit einem ersten Phasenmodulzweig 11 und einem zweiten Phasenmodulzweig 13 verbunden. Der erste Phasenmodulzweig 11 und der zweite Phasenmodulzweig 13 bilden ein erstes Phasenmodul 15 des Stromrichters 1. Das dem ersten Wechselspannungsanschluss 5 abgewandte Ende des ersten Phasenmodulzweigs 11 ist mit einem ersten Gleichspannungsanschluss 16 elektrisch verbunden; das dem ersten Wechselspannungsanschluss 5 abgewandte Ende des zweiten Phasenmodulzweigs 13 ist mit einem zweiten Gleichspannungsanschluss 17 elektrisch verbunden. Der erste Gleichspannungsanschluss 16 ist ein positiver Gleichspannungsanschluss; der zweite Gleichspannungsanschluss 17 ist ein negativer Gleichspannungsanschluss.

Der zweite Wechselspannungsanschluss 7 ist mit einem Ende eines dritten Phasenmodulzweigs 18 und mit einem Ende eines vierten Phasenmodulzweigs 21 elektrisch verbunden. Der dritte Phasenmodulzweig 18 und der vierte Phasenmodulzweig 21 bilden ein zweites Phasenmodul 24. Der dritte Wechselspannungsanschluss 9 ist mit einem Ende eines fünften Phasenmodulzweigs 27 und mit einem Ende eines sechsten Phasenmodulzweigs 29 elektrisch verbunden. Der fünfte Phasenmodulzweig 27 und der sechste Phasenmodulzweig 29 bilden ein drittes Phasenmodul 31.

Das dem zweiten Wechselspannungsanschluss 7 abgewandte Ende des dritten Phasenmodulzweigs 18 und das dem dritten Wechselspannungsanschluss 9 abgewandte Ende des fünften Phasenmodulzweigs 27 sind mit dem ersten Gleichspannungsanschluss 16 elektrisch verbunden. Das dem zweiten Wechselspannungsanschluss 7 abgewandte Ende des vierten Phasenmodulzweigs 21 und das dem dritten Wechselspannungsanschluss 9 abgewandte Ende des sechsten Phasenmodulzweigs 29 sind mit dem zweiten Gleichspannungsanschluss 17 elektrisch verbunden. Der erste Phasenmodulzweig 11, der dritte Phasenmodulzweig 18 und der fünfte Phasenmodulzweig 27 bilden ein positivseitiges Stromrichterteil 32; der zweite Phasenmodulzweig 13, der vierte Phasenmodulzweig 21 und der sechste Phasenmodulzweig 29 bilden ein negativseitiges Stromrichterteil 33.

Jeder Phasenmodulzweig weist eine Mehrzahl von Modulen (1_1, 1_2, 1_3, 1_4 ... 1_n; 2_1 ... 2_n; usw.) auf, welche (mittels ihrer Modulanschlüsse) elektrisch in Reihe geschaltet sind. Solche Module werden auch als Submodule bezeichnet. Im Ausführungsbeispiel der Figur 1 weist jeder Phasenmodulzweig n Module auf. Die Anzahl der mittels ihrer Modulanschlüsse elektrisch in Reihe geschalteten Module kann sehr verschieden sein, mindestens sind drei Module in Reihe geschaltet, es können aber auch beispielsweise 50, 100 oder mehr Module elektrisch in Reihe geschaltet sein. Im Ausführungsbeispiel ist n = 36: der erste Phasenmodulzweig 11 weist also 36 Module 1_1, 1_2, 1_3, ... 1_36 auf. Die anderen Phasenmodulzweige 13, 18, 21, 27 und 29 sind gleichartig aufgebaut.

Die Module 1_1 bis 6_n werden von einer nicht dargestellten Steuereinrichtung angesteuert. Von dieser zentralen Steuereinrichtung werden optische Nachrichten bzw. optische Signale über eine optische Kommunikationsverbindung (zum Beispiel über einen Lichtwellenleiter) zu den einzelnen Modulen übertragen. Beispielsweise sendet die Steuereinrichtung an die einzelnen Module jeweils einen Sollwert zur Höhe der Ausgangsspannung, die das jeweilige Modul bereitstellen soll.

Jedem Modul 1_1 bis 6_n des modularen Multilevelstromrichters 1 ist ein (elektrischer) Überbrückungsschalter zugeordnet. So ist beispielsweise dem Modul 1_1 des ersten Phasenmodulzweigs 11 ein erster Überbrückungsschalter S1_1 zugeordnet. In gleicher Weise ist dem zweiten Modul 1_2 ein zweiter Überbrückungsschalter S1_2 zugeordnet und dem letzten Modul 1_n des ersten Phasenmodulzweigs 11 ist ein n-ter Überbrückungsschalter S1_n zugeordnet. Auch den Modulen der anderen Phasenmodulzweige ist jeweils ein Überbrückungsschalter zugeordnet; diese Überbrückungsschalter sind jedoch aus Gründen der Übersichtlichkeit in der Figur 1 nicht dargestellt. Die Überbrückungsschalter weisen insbesondere jeweils einen Festkontakt und einen Bewegkontakt auf. Es handelt sich also insbesondere um mechanische Überbrückungsschalter.

Der erste Überbrückungsschalter S1_1 überbrückt (in seinem geschlossenen Zustand) das erste Modul 1_1. Dazu ist der Festkontakt des ersten Überbrückungsschalters S1_1 mit dem ersten Modulanschluss 212 elektrisch verbunden; der Bewegkontakt des ersten Überbrückungsschalters S1_1 ist mit dem zweiten Modulanschluss 215 elektrisch verbunden. Der erste Überbrückungsschalter S1_1 weist eine pyrotechnische Treibladung T1_1 auf. Diese pyrotechnische Treibladung T1_1 ist in der Figur 1 als ein kleines Quadrat symbolisiert. Diese Treibladung T1_1 ist dazu eingerichtet, auf ihre Entzündung hin den Überbrückungsschalter zu schließen. Dies erfolgt insbesondere dadurch, dass die pyrotechnische Treibladung T1_1 auf ihre Entzündung hin den Bewegkontakt des ersten Überbrückungsschalters S1_1 in Richtung des Festkontakts beschleunigt und dadurch den ersten Überbrückungsschalter S1_1 schließt.

Die Treibladung T1_1 ist mittels einer Anzündleitung 40 mit einem elektrischen Anzünder 45 verbunden. Dabei ist ein erstes Ende 41 der Anzündleitung 40 mit dem elektrischen Anzünder 45 verbunden und ein zweites Ende 42 der Anzündleitung 40 ist mit der ersten Treibladung T1_1 verbunden. Der elektrische Anzünder 45 ist dazu eingerichtet, auf ein elektrisches Auslösesignal hin die Anzündleitung anzuzünden. Der elektrische Anzünder 45 ist mittels einer elektrischen Leitung 48 mit einer elektronischen Zündschaltung 51 elektrisch verbunden.

Die elektronische Zündschaltung 51 erzeugt (im Falle eines Auftretens eines Fehlers an dem ersten Modul 1_1) ein elektrisches Auslösesignal 53, welches über die elektrische Leitung 48 zu dem elektrischen Anzünder 45 übertragen wird. Auf das elektrische Auslösesignal 53 hin zündet der elektrische Anzünder 45 die Anzündleitung 40 an ihrem ersten Ende 41 an. Daraufhin brennt die (zu der Treibladung T1_1 verlaufende) Anzündleitung 40 explosionsartig bis zu ihrem zweiten Ende 42 ab und entzündet daraufhin die erste Treibladung T1_1. Daraufhin wird der Überbrückungsschalter S1_1 geschlossen und das Modul 1_1 wird elektrisch überbrückt.

Der elektrische Anzünder 45, die elektrische Leitung 40 und die elektronische Zündschaltung 51 sind Teil einer Schalter-Steuerungseinheit 55, welche beabstandet von dem Überbrückungsschalter S1_1 angeordnet ist. Die Anzündleitung 40 verbindet die Schalter-Steuerungseinheit 55 (hier insbesondere den elektrischen Anzünder 45) mit dem Überbrückungsschalter S1_1 (hier insbesondere mit der ersten Treibladung T1_1).

Auch die anderen Überbrückungsschalter des modularen Multilevelstromrichters sind über jeweils eine (eigene) Anzündleitung mit einer gleichartig aufgebauten Schalter-Steuerungseinheit verbunden. Dies ist jedoch aus Gründen der Übersichtlichkeit in der Figur 1 nur beispielhaft für die Module 1_1 und 1_4 dargestellt.

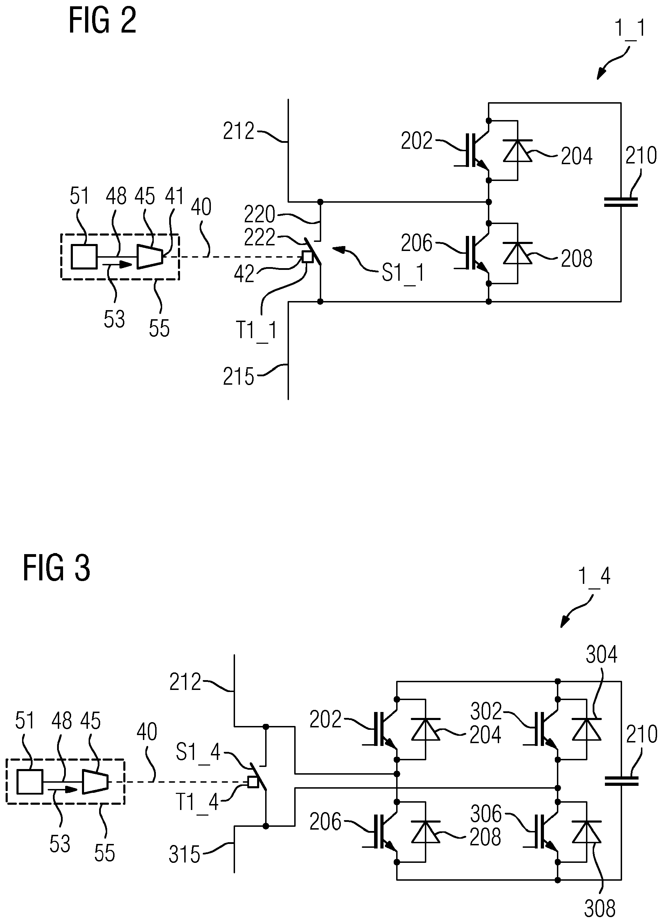

In Figur 2 ist ein Ausführungsbeispiel eines Moduls des Multilevelstromrichters 1 mit einer erfindungsgemäßen Anordnung dargestellt. Bei diesem Modul kann es sich beispielsweise um das Modul 1_1 (oder auch um eines der anderen Module) des modularen Multilevelstromrichters 1 handeln.

Das Modul 1_1 ist als ein Halbbrücken-Modul 1_1 ausgestaltet. Das Modul 1_1 weist ein erstes (abschaltbares) elektronisches Schaltelement 202 (erstes abschaltbares Halbleiterventil 202) mit einer ersten antiparallel geschalteten Diode 204 auf. Weiterhin weist das Modul 1_1 ein zweites (abschaltbares) elektronisches Schaltelement 206 (zweites abschaltbares Halbleiterventil 206) mit einer zweiten antiparallel geschalteten Diode 208 sowie einen elektrischen Energiespeicher 210 in Form eines Kondensators 210 auf. Das erste elektronische Schaltelement 202 und das zweite elektronische Schaltelement 206 sind jeweils als ein IGBT (insulated-gate bipolar transistor) ausgestaltet. Das erste elektronische Schaltelement 202 ist elektrisch in Reihe geschaltet mit dem zweiten elektronischen Schaltelement 206. Am Verbindungspunkt zwischen den beiden elektronischen Schaltelementen 202 und 206 ist ein erster (galvanischer) Modulanschluss 212 angeordnet. An dem Anschluss des zweiten elektronischen Schaltelements 206, welcher dem Verbindungspunkt gegenüberliegt, ist ein zweiter (galvanischer) Modulanschluss 215 angeordnet. Der zweite Modulanschluss 215 ist weiterhin mit einem ersten Anschluss des Energiespeichers 210 elektrisch verbunden; ein zweiter Anschluss des Energiespeichers 210 ist elektrisch verbunden mit dem Anschluss des ersten elektronischen Schaltelements 202, der dem Verbindungspunkt gegenüberliegt.

Der Energiespeicher 210 ist also elektrisch parallel geschaltet zu der Reihenschaltung aus dem ersten elektronischen Schaltelement 202 und dem zweiten elektronischen Schaltelement 206. Durch entsprechende Ansteuerung des ersten elektronischen Schaltelements 202 und des zweiten elektronischen Schaltelements 206 durch die Steuereinrichtung des Stromrichters kann erreicht werden, dass zwischen dem ersten Modulanschluss 212 und dem zweiten Modulanschluss 215 entweder die Spannung des Energiespeichers 210 ausgegeben wird oder keine Spannung ausgegeben wird (d.h. eine Nullspannung ausgegeben wird). Durch Zusammenwirken der Module der einzelnen Phasenmodulzweige kann so die jeweils gewünschte Ausgangsspannung des Stromrichters erzeugt werden.

Parallel zu dem Modul 1_1 ist ein mechanischer Überbrückungsschalter S1_1 geschaltet. Der Überbrückungsschalter S1_1 weist einen Festkontakt 220 und einen Bewegkontakt 222 auf. Der Festkontakt 220 ist elektrisch mit einem der beiden Modulanschlüsse verbunden; der Bewegkontakt 222 ist elektrisch mit dem anderen der beiden Modulanschlüsse verbunden. Im Ausführungsbeispiel ist der Festkontakt 220 mit dem ersten Modulanschluss 212 verbunden; der Bewegkontakt 222 ist mit dem zweiten Modulanschluss 215 verbunden.

Der mechanische Überbrückungsschalter S1_1 ist also zwischen den ersten Modulanschluss 212 und den zweiten Modulanschluss 215 geschaltet. Wenn der mechanische Überbrückungsschalter S1_1 in den geschlossenen Zustand / eingeschalteten Zustand übergeht, dann überbrückt der mechanische Überbrückungsschalter S1_1 das Modul 1_1; das Modul ist dann mittels des mechanischen Überbrückungsschalters S1_1 kurzgeschlossen. Der Überbrückungsschalter stellt also eine Kurzschließeinrichtung dar. Der Betriebsstrom des Stromrichters fließt dann beispielsweise vom ersten Modulanschluss 212 über den mechanischen Überbrückungsschalter S1_1 zum zweiten Modulanschluss 215 (und nicht über die übrigen Bauelemente des Moduls 1_1, insbesondere nicht über die Schaltelemente 202, 206 und die Dioden 204, 208).

Der Überbrückungsschalter S1_1 weist die Treibladung T1_1 auf. Diese Treibladung T1_1 ist mittels der Anzündleitung 40 mit dem elektrischen Anzünder 45 verbunden. Der elektrische Anzünder 45, die elektrische Leitung 48 und die elektronische Schaltung 51 sind Bestandteile der Schalter-Steuerungseinheit 55.

In Figur 3 ist ein weiteres Ausführungsbeispiel eines Moduls des modularen Multilevelstromrichters mit einer erfindungsgemäßen Anordnung dargestellt. Bei diesem Modul handelt es sich um das Modul 1_4 des modularen Multilevelstromrichters 1. Es kann sich jedoch bei diesem Modul auch um eines der anderen Module des modularen Multilevelstromrichters 1 handeln.

Zusätzlich zu den bereits aus Figur 2 bekannten ersten elektronischen Schaltelement 202, zweiten elektronischen Schaltelement 206, erster Freilaufdiode 204, zweiter Freilaufdiode 208 und Energiespeicher 210 weist das in Figur 3 dargestellte Modul 1_4 ein drittes elektronisches Schaltelement 302 mit einer antiparallel geschalteten dritten Freilaufiode 304 sowie ein viertes elektronisches Schaltelement 306 mit einer vierten antiparallel geschalteten Freilaufdiode 308 auf. Das dritte elektronische Schaltelement 302 und das vierte elektronische Schaltelement 306 sind jeweils als ein IGBT ausgestaltet. Im Unterschied zur Schaltung der Figur 2 ist der zweite Modulanschluss 315 nicht mit dem zweiten elektronischen Schaltelement 206 elektrisch verbunden, sondern mit einem Mittelpunkt (Verbindungspunkt) einer elektrischen Reihenschaltung aus dem dritten elektronischen Schaltelement 302 und dem vierten elektronischen Schaltelement 306.

Das Modul 1_4 der Figur 3 ist ein sogenanntes Vollbrücken-Modul 1_4. Dieses Vollbrücken-Modul 1_4 zeichnet sich dadurch aus, dass bei entsprechender Ansteuerung der vier elektronischen Schaltelemente zwischen dem ersten (galvanischen) Modulanschluss 212 und dem zweiten (galvanischen) Modulanschluss 315 wahlweise entweder die positive Spannung des Energiespeichers 210, die negative Spannung des Energiespeichers 210 oder eine Spannung des Wertes Null (Nullspannung) ausgegeben werden kann. Somit kann also mittels des Vollbrückenmoduls 1_4 die Polarität der Ausgangsspannung umgekehrt werden. Der Multilevelstromrichter 1 kann entweder nur Halbbrücken-Module, nur Vollbrücken-Module oder auch Halbbrücken-Module und Vollbrücken-Module aufweisen.

Parallel zu dem Modul 1_4 ist der mechanische Überbrückungsschalter S1_4 geschaltet. Der mechanische Überbrückungsschalter S1_4 ist also zwischen den ersten Modulanschluss 212 und den zweiten Modulanschluss 315 geschaltet (der erste Modulanschluss 212 und der zweite Modulanschluss 315 sind also mittels des Überbrückungsschalters S1_4 miteinander verbunden). Wenn der mechanische Überbrückungsschalter S1_4 in seinen eingeschalteten Zustand / elektrisch leitfähigen Zustand übergeht, dann überbrückt der mechanische Überbrückungsschalter S1_4 das Modul 1_4; der mechanische Überbrückungsschalter S1_4 schließt das Modul 1_4 kurz. Der Betriebsstrom des Stromrichters fließt dann beispielsweise vom ersten Modulanschluss 212 über den mechanischen Überbrückungsschalter S1_4 zum zweiten Modulanschluss 315 (und nicht über die übrigen Bauelemente des Moduls 1_4, insbesondere nicht über die Schaltelemente 202, 206, 302, 306 und/oder die Dioden 204, 208, 304, 308). Der mechanische Überbrückungsschalter S1_4 kann wie der mechanische Überbrückungsschalter S1_1 aufgebaut sein.

Der Überbrückungsschalter S1_4 weist die Treibladung T1_4 auf, welche über die Anzündleitung 40 mit dem elektrischen Anzünder 45 verbunden ist. Die Zündung der Treibladung T1_4 und das Schließen des Überbrückungsschalters S1_4 erfolgt dabei gleichartig wie im Zusammenhang mit den Figuren 1 und 2 beschrieben.

Am Beispiel des Moduls 1_4 lässt sich besonders gut die Problematik der unterschiedlichen elektrischen Potentiale erkennen. Je nach Schaltstellung des dritten elektronischen Schaltelementes 302 und des vierten elektronischen Schaltelementes 306 kann der zweite Modulanschluss 315 entweder mit dem oberen Anschluss des elektrischen Energiespeichers 210 oder mit dem unteren Anschluss des elektrischen Energiespeichers 210 verbunden sein, also mit zwei unterschiedlich großen elektrischen Potentialen. Aufgrund der Anzündleitung 40 findet jedoch vorteilhafterweise eine elektrische galvanische Trennung zwischen dem Überbrückungsschalter S1_4 und der Schalter-Steuerungseinheit 55 statt, so dass beispielsweise die elektronische Zündschaltung 51 der Schalter-Steuerungseinheit 55 nicht durch die (oftmals hohen) wechselnden elektrischen Potentiale des Moduls 1_4 beeinträchtigt wird. Mittels der Anzündleitung 40 kann also sehr einfach und kostengünstig eine galvanische Trennung zwischen dem Modul 1_4 und der Schalter-Steuerungseinheit 55 erreicht werden.

Optional können mit einer Anzündleitung 40 auch mehrere pyrotechnische Treibladungen angezündet/ausgelöst werden. Auch ist es möglich, dass eine pyrotechnische Treibladung optional mittels mehrerer elektrischer Anzünder entzündet werden kann (Redundanz, Erhöhung der Zuverlässigkeit). Dazu kann die Anzündleitung beispielsweise einen Zündverteiler aufweisen, so dass mehrere elektrische Anzünder mit einer Treibladung gekoppelt werden können.

Es wurde eine Anordnung und ein Verfahren beschrieben, mit denen sicher und zuverlässig ein Modul eines modularen Multilevelstromrichters im Fehlerfall überbrückt werden kann. Dabei kann auf einfache und kostengünstige Weise mittels einer pyrotechnischen Anzündleitung eine elektrische Isolation zwischen dem dem jeweiligen Modul zugeordneten Überbrückungsschalter und der Schalter-Steuerungseinheit 55 (hier insbesondere dem elektrischen Anzünder 45) realisiert werden. Durch die Verwendung einer explosionsartig abbrennenden Anzündleitung tritt insbesondere nur eine sehr geringe zeitliche Verzögerung beim Anzünden der pyrotechnischen Treibladung des Überbrückungsschalters auf.

Bei der beschriebenen Anordnung und dem beschriebenen Verfahren ist also insbesondere vorteilhaft, dass keine elektrische Verbindung zwischen der Schalter-Steuerungseinheit 55 und dem Überbrückungsschalter besteht. Der elektrische Anzünder ist nämlich Bestandteil der Schalter-Steuerungseinheit und lediglich über die elektrisch nichtleitende Anzündleitung 40 mit dem Überbrückungsschalter verbunden. Eine derartige Anzündleitung ist am Markt beispielsweise unter dem Handelsnamen TLX (Thin Layer Explosive) erhältlich; sie ist beispielsweise in der Offenlegungsschrift DE 40 15 065 A1 beschrieben. Eine solche Anzündleitung brennt explosionsartig ab. Mit anderen Worten gesagt, überträgt eine solche Anzündleitung ein Detonationssignal von ihrem ersten Ende zu ihrem zweiten Ende, hier also vom elektrischen Anzünder 45 zur Treibladung. Derartige Anzündleitungen haben eine sehr hohe Abbrandgeschwindigkeit von mehr als 100 m/s, insbesondere sogar von mehr als 1000 m/s. In der Offenlegungsschrift DE 40 15 065 A1 sind beispielsweise Abbrandgeschwindigkeiten von 1500 bis 1800 m/s angegeben. Bei einer beispielhaften Länge der Anzündleitung von 30 cm ergibt sich so eine Laufzeit/Abbrandzeit der Anzündleitung von etwa 200 µs. Eine derartig kurze Abbrandzeit verzögert das Schließen des Überbrückungsschalters im Fehlerfall nur in einem sehr geringen, akzeptablen Maße.

Solche Anzündleitungen sind kostengünstig am Markt erhältlich. Insbesondere ist eine galvanische Trennung mittels der Anzündleitung 40 deutlich preisgünstiger zu erreichen als eine in dem Überbrückungsschalter angeordnete Isolierung zwischen dem elektrischen Anzünder 45 und den Anschlüssen des Überbrückungsschalters (welche beispielsweise notwendig wäre, wenn der elektrische Anzünder 45 unmittelbar an der Treibladung des Überbrückungsschalters angeordnet wäre).

## Patentansprüche

1. Anordnung mit
- einem Überbrückungsschalter (S1_1) für ein Modul (1_1) eines modularen Multilevelstromrichters (1), wobei der Überbrückungsschalter (S1_1) durch eine Treibladung (T1_1) antreibbar ist, und
- einem elektrischen Anzünder (45), der beabstandet von dem Überbrückungsschalter (S1_1) angeordnet ist, **dadurch gekennzeichnet, dass**
- der elektrische Anzünder (45) und die Treibladung (T1_1) mittels einer pyrotechnischen Anzündleitung (40), welche den elektrischen Strom nur schlecht leitet, verbunden sind.

2. Anordnung nach Anspruch 1,
**dadurch gekennzeichnet, dass**
- der elektrische Anzünder (45) dazu eingerichtet ist, auf ein elektrisches Auslösesignal (53) hin die Anzündleitung (40) anzuzünden.

3. Anordnung nach Anspruch 1 oder 2,
**dadurch gekennzeichnet, dass**
- die Treibladung (T1_1) dazu eingerichtet ist, auf ihre Entzündung hin den Überbrückungsschalter (S1_1) zu schließen.

4. Anordnung nach einem der vorhergehenden Ansprüche,
**dadurch gekennzeichnet, dass**
- der Überbrückungsschalter (S1_1) einen Festkontakt (220) und einen Bewegkontakt (222) aufweist, und die Treibladung (T1_1) dazu eingerichtet ist, auf ihre Entzündung hin den Bewegkontakt (222) in Richtung des Festkontakts (220) zu beschleunigen und dadurch den Überbrückungsschalter (S1_1) zu schließen.

5. Anordnung nach einem der vorhergehenden Ansprüche,
**dadurch gekennzeichnet, dass**
- das Modul (1_1) einen ersten Modulanschluss (212), einen zweiten Modulanschluss (215), ein erstes elektronisches Schaltelement (202), ein zweites elektronisches Schaltelement (206) und einen elektrischen Energiespeicher (210) aufweist.

6. Anordnung nach Anspruch 5,
**dadurch gekennzeichnet, dass**
- das erste elektronische Schaltelement (202) und das zweite elektronische Schaltelement (206) in einer Halbbrückenschaltung angeordnet sind.

7. Anordnung nach Anspruch 5 oder 6,
**dadurch gekennzeichnet, dass**
- das Modul (1_4) ein drittes elektronisches Schaltelement (302) und ein viertes elektronisches Schaltelement (306) aufweist, wobei das erste elektronische Schaltelement (202), das zweite elektronische Schaltelement (206), das dritte elektronische Schaltelement (302) und das vierte elektronische Schaltelement (306) in einer Vollbrückenschaltung angeordnet sind.

8. Modularer Multilevelstromrichter (1) mit einer Mehrzahl von Anordnungen nach einem der Ansprüche 1 bis 7.

9. Modularer Multilevelstromrichter nach Anspruch 8,
**dadurch gekennzeichnet, dass**
- die Module zweipolige Module (1_1 ... 6_n) sind, welche elektrisch in Reihe geschaltet sind.

10. Verfahren zum elektrischen Überbrücken eines Moduls (1_1) eines modularen Multilevelstromrichters, wobei parallel zu dem Modul (1_1) ein Überbrückungsschalter (S1_1) geschaltet ist, der durch eine Treibladung (T1_1) antreibbar ist, wobei bei dem Verfahren
- mittels eines elektrischen Anzünders (45), der beabstandet von dem Überbrückungsschalter (S1_1) angeordnet ist, ein erstes Ende (41) einer pyrotechnischen Anzündleitung (40), welche den elektrischen Strom nur schlecht leitet, angezündet wird,
- daraufhin die Anzündleitung (40) bis zu einem zweiten Ende (42) abbrennt, und
- von dem zweiten Ende (42) der Anzündleitung (40) die Treibladung (T1_1) entzündet wird, woraufhin der Überbrückungsschalter (S1_1) geschlossen und dadurch das Modul (1_1) elektrisch überbrückt wird.

11. Verfahren nach Anspruch 10,
**dadurch gekennzeichnet, dass**
- das Modul (1_1) einen ersten Modulanschluss (212), einen zweiten Modulanschluss (215), ein erstes elektronisches Schaltelement (202), ein zweites elektronisches Schaltelement (206) und einen elektrischen Energiespeicher (210) aufweist.

12. Verfahren nach Anspruch 10 oder 11,
**dadurch gekennzeichnet, dass**
- das erste elektronische Schaltelement (202) und das zweite elektronische Schaltelement (206) in einer Halbbrückenschaltung angeordnet sind.

13. Verfahren nach einem der Ansprüche 10 bis 12,
**dadurch gekennzeichnet, dass**
- das Modul (1_4) ein drittes elektronisches Schaltelement (302) und ein viertes elektronisches Schaltelement (306) aufweist, wobei das erste elektronische Schaltelement (202), das zweite elektronische Schaltelement (206), das dritte elektronische Schaltelement (302) und das vierte elektronische Schaltelement (306) in einer Vollbrückenschaltung angeordnet sind.

## Claims

1. Arrangement having
- a bypass switch (S1_1) for a module (1_1) of a modular multilevel converter (1), wherein the bypass switch (S1_1) is actuatable by a propellant charge (T1_1), and
- an electric igniter (45) which is arranged spaced apart from the bypass switch (S1_1), **characterized in that**
- the electric igniter (45) and the propellant charge (T1_1) are connected by means of a pyrotechnic ignition line (40) which only poorly conducts the electric current.

2. Arrangement according to Claim 1,
**characterized in that**
- the electric igniter (45) is configured to ignite the ignition line (40) in response to an electric tripping signal (53) .

3. Arrangement according to Claim 1 or 2,
**characterized in that**
- the propellant charge (T1_1) is configured to close the bypass switch (S1_1) in response to being ignited.

4. Arrangement according to one of the preceding claims, **characterized in that**
- the bypass switch (S1_1) has a fixed contact (220) and a moving contact (222), and the propellant charge (T1_1) is configured, in response to being ignited, to accelerate the moving contact (222) towards the fixed contact (220) and to thereby close the bypass switch (S1_1).

5. Arrangement according to one of the preceding claims, **characterized in that**
- the module (1_1) has a first module connection (212), a second module connection (215), a first electronic switching element (202), a second electronic switching element (206) and an electric energy store (210).

6. Arrangement according to Claim 5,
**characterized in that**
- the first electronic switching element (202) and the second electronic switching element (206) are arranged in a half-bridge circuit.

7. Arrangement according to Claim 5 or 6,
**characterized in that**
- the module (1_4) has a third electronic switching element (302) and a fourth electronic switching element (306), wherein the first electronic switching element (202), the second electronic switching element (206), the third electronic switching element (302) and the fourth electronic switching element (306) are arranged in a full-bridge circuit.

8. Modular multilevel converter (1) having a plurality of arrangements according to one of Claims 1 to 7.

9. Modular multilevel converter according to Claim 8,
**characterized in that**
- the modules are two-pole modules (1_1 ... 6_n) which are electrically connected in series.

10. Method for electrically bypassing a module (1_1) of a modular multilevel converter, wherein a bypass switch (S1_1) which is actuatable by a propellant charge (T1_1) is connected in parallel with the module (1_1), wherein in the method
- a first end (41) of a pyrotechnic ignition line (40) which only poorly conducts the electric current is ignited by means of an electric igniter (45) which is arranged spaced apart from the bypass switch (S1_1),
- thereupon the ignition line (40) burns down to a second end (42), and
- from the second end (42) of the ignition line (40), the propellant charge (T1_1) is ignited, whereupon the bypass switch (S1_1) is closed and the module (1_1) is thereby electrically bypassed.

11. Method according to Claim 10,
**characterized in that**
- the module (1_1) has a first module connection (212), a second module connection (215), a first electronic switching element (202), a second electronic switching element (206) and an electric energy store (210).

12. Method according to Claim 10 or 11,
**characterized in that**
- the first electronic switching element (202) and the second electronic switching element (206) are arranged in a half-bridge circuit.

13. Method according to one of Claims 10 to 12,
**characterized in that**
- the module (1_4) has a third electronic switching element (302) and a fourth electronic switching element (306), wherein the first electronic switching element (202), the second electronic switching element (206), the third electronic switching element (302) and the fourth electronic switching element (306) are arranged in a full-bridge circuit.

## Revendications

1. Montage comprenant
- un interrupteur (S1_1) de shuntage d'un module (1_1) d'un convertisseur (1) modulaire à plusieurs niveaux, dans lequel l'interrupteur (S1_1) de shuntage peut être actionné par une charge (T1_1) d'actionnement, et
- un allumeur (45) électrique, qui est monté à distance de l'interrupteur (S1_1) de shuntage, **caractérisé en ce que**
- l'allumeur (45) électrique et la charge (T1_1) d'actionnement sont reliés entre eux au moyen d'une ligne (40) d'allumage pyrotechnique, qui ne conduit que mal le courant électrique.

2. Montage suivant la revendication 1,
**caractérisé en ce que**
- l'allumeur (45) électrique est conçu pour allumer la ligne (40) d'allumage sur un signal (53) électrique de déclenchement.

3. Montage suivant la revendication 1 ou 2,
**caractérisé en ce que**
- la charge (T1_1) d'actionnement est conçue pour, sur son allumage, fermer l'interrupteur (S1_1) de shuntage.

4. Montage suivant l'une des revendications précédentes, **caractérisé en ce que**
- l'interrupteur (S1_1) de shuntage a un contact (220) fixe et un contact (222) mobile et la charge (T1_1) d'actionnement est conçue pour, sur son allumage, accélérer le contact (222) mobile en direction du contact (220) fixe et fermer ainsi l'interrupteur (S1_1) de shuntage.

5. Montage suivant l'une des revendications précédentes, **caractérisé en ce que**
- le module (1_1) a une première borne (212) de module, une deuxième borne (215) de module, un premier élément (202) électronique de coupure, un deuxième élément (206) électronique de coupure et un accumulateur (210) d'énergie électrique.

6. Montage suivant la revendication 5,
**caractérisé en ce que**
- le premier élément (202) électronique de coupure et le deuxième élément (206) électronique de coupure sont montés dans un circuit à demi-pont.

7. Montage suivant la revendication 5 ou 6,
**caractérisé en ce que**
- le module (1_4) a un troisième élément (302) électronique de coupure et un quatrième élément (306) électronique de coupure, le premier élément (202) électronique de coupure et le deuxième élément (206) électronique de coupure, le troisième élément (302) électronique de coupure et le quatrième élément (306) électronique de coupure étant montés dans un circuit à pont complet.

8. Convertisseur (1) modulaire à plusieurs niveaux ayant une pluralité de montages suivant l'une des revendications 1 à 7.

9. Convertisseur modulaire à plusieurs niveaux suivant la revendication 8,
**caractérisé en ce que**
- les modules sont des modules (1_1 ... 6_n) bipolaires, qui sont montés électriquement en série.

10. Procédé de shuntage électrique d'un module (1_1) d'un convertisseur modulaire à plusieurs niveaux, dans lequel, en parallèle au module (1_1) est monté un interrupteur (S1_1) de shuntage, qui peut être actionné par une charge (T1_1) d'actionnement, dans lequel dans le procédé
- au moyen d'un allumeur (45) électrique, qui est disposé à distance de l'interrupteur (S1_1) de shuntage, on allume un premier bout (41) d'un ligne (40) d'allumage pyrotechnique, qui ne conduit que mal le courant électrique,
- ensuite la ligne (40) d'allumage brûle jusqu'à son deuxième bout (42), et
- on allume, par le deuxième bout (42) de la ligne (40) d'allumage, la charge (T1_1) d'actionnement, sur quoi on ferme l'interrupteur (S1_1) de shuntage et on shunte ainsi électriquement le module (1_1).

11. Procédé suivant la revendication 10,
**caractérisé en ce que**
- le module (1_1) a une première borne (212) de module, une deuxième borne (215) de module, un premier élément (202) électronique de coupure, un deuxième élément (206) électronique de coupure et un accumulateur (210) d'énergie électrique.

12. Procédé suivant la revendication 10 ou 11,
**caractérisé en ce que**
- le premier élément (202) électronique de coupure et le deuxième élément (206) électronique de coupure sont montés dans un circuit à demi-pont.

13. Procédé suivant l'une des revendications 10 à 12, **caractérisé en ce que**
- le module (1_4) a un troisième élément (302) électronique de coupure et un quatrième élément (306) électronique de coupure, le premier élément (202) électronique de coupure et le deuxième élément (206) électronique de coupure, le troisième élément (302) électronique de coupure et le quatrième élément (306) électronique de coupure étant montés dans un circuit à pont complet.
